(19) Europäisches Patentamt
European Patent Office
Office européen des brevets

(11) Publication number: 0 449 291 A2

# (12) EUROPEAN PATENT APPLICATION

(21) Application number: 91105009.4

(22) Date of filing: 28.03.91

(51) Int. Cl.5: B29C 71/04, G09F 3/00, B01J 19/12, //B29K86:00

(30) Priority: 30.03.90 US 501722

(43) Date of publication of application: 02.10.91 Bulletin 91/40

(84) Designated Contracting States: AT BE CH DE DK ES FR GB GR IT LI LU NL SE

(71) Applicant: UNION CARBIDE CHEMICALS AND PLASTICS COMPANY, INC.
39 Old Ridgebury Road
Danbury Connecticut 06817-0001(US)

(72) Inventor: Beach, William Frederick
1007 Severin Drive
Bridgewater 08807, New Jersey(US)
Inventor: Austin, Terry Marshall
4 Dover Circle
Newton 06470, Connecticut(US)
Inventor: Humphrey, Bruce John
RR No.2, Box 20A
Clear Lake 54005, Wisconsin(US)

(74) Representative: Brandes, Jürgen, Dr.Rer.Nat. et al
Wuesthoff & Wuesthoff, Patent- und Rechtsanwälte, Schweigerstrasse 2
W-8000 München 90(DE)

## (54) Process for the creation of selective fluorescent sites or regions in parylene films and coatings.

(57) A method is provided for imparting to articles comprised in whole or in part of parylene, selective sites which fluoresce upon exposure to light of a proper wavelength. Articles treated by the process of the invention are also provided.

EP 0 449 291 A2

BACKGROUND OF THE INVENTION

1) FIELD OF THE INVENTION

This invention relates in general to a process for the treatment of parylene films and coatings. In one aspect, this invention is directed to a process for the treatment of parylene wherein selected sites are rendered fluorescent when exposed to light excitation means such as ultraviolet light. In a further aspect, this invention relates to articles coated in whole or in part with parylene, such as negotiable instruments, identification cards, films, disks and the like, which are caused to have certain sites of a predetermined configuration capable of fluorescing when exposed to light of the proper wavelength.

2) BACKGROUND OF THE RELATED ART

Parylene is a generic term applied to the clash of polymers, the poly-p-xylylenes (I), which are derived most conveniently from a dimer, the [2.2] paracyclophanes (II), by a process of vapor deposition polymerization.

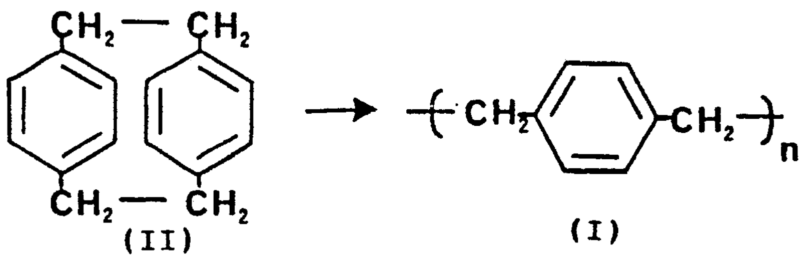

(II) (I)

When deposited on a substrate, parylene forms a continuous, inert, transparent, conformal coating which has excellent physical, electrical and barrier properties, excellent resistance to chemical attack, and which retains these attractive properties to relatively high temperatures. Due to its ability to provide films of uniform thinness and conform to substrates of varied geometric shapes, it is ideally suited for use as a conformal coating in a wide variety of fields, particularly in the electronics industry.

The preparation of p-xylylene polymers by various routes has been reported in the patent literature. For example, in British patent number 650,947 which was granted March 7, 1951,.polymer formation was detected on the walls of a cooling chamber after p-xylene was vaporized and pyrolized. Those who later prepared poly-p-xylylene films by this general procedure described them as being inherently fluorescent.

Also in U.S Patent 2,719,131 which issued in September 27, 1955_to E. I. DuPont de Nemours and Company there is disclosed a process for preparing poly-p-xylylene wherein the vapors of p-xylene gas were pyrolized in the presence of chlorine gas.

The preparation of para-xylylene polymers was also disclosed in U.S. Patent 3,342,754 which issued on September 19,1967 to William Franklin Gorham and is assigned to Union Carbide Corporation. In this reference it is indicated that true linear homopolymers of para-xylylene could be produced in nearly quantitative yields by heating a cyclo-di-para-xylylene having up to six aromatic nuclear substituent groups to a temperature between 450°C and 700°C for a time sufficient to cleave substantially all of the di-para-xylylene into vaporous para-xylylene monomer and cooling the vaporous monomer to a temperature below its ceiling condensation temperature. Moreover, the higher purity poly-p-xylylene films prepared by the method of Gorham are substantially non fluorescent. The fluorescence reported in films prepared by earlier methods are presently thought to result from impurities introduced by the process.

As indicated above, prior to the present invention a wide variety of references have been available in the literature disclosing the preparation and use of poly(p-xylylene). One of the main utilities has been, and continues to be, its use as a conformal coating for a variety of articles, such as electronic circuit boards, and the like.

Parylene's use as a conformal coating for military circuit boards was recognized early, and its inclusion among the electrical insulation compounds qualifiable under the military specification governing coatings for printed circuit assemblies (MIL-I-46058) was a first order of business upon public announcement of the product in 1965. In the course of events, users of conventional coatings found that inspection of the coated board or assembly for holidays or pinholes would be greatly facilitated by the inclusion of a fluorescent dye in the otherwise clear and colorless coatings. The fluorescence from the dye would render the coated areas identifiable under an inspectors black light, but would otherwise would not be noticed. As the military

requirements evolved, it became necessary for the coating manufacturer to provide the option of a fluorescent version of each coating at the users request. For conventional coatings this requirement was easily met by adding a small amount of any one of a number of commercial brighteners.

In the parylene vapor deposition polymerization process, however, a fluorescent additive compound such as a commercial brightener could conceptually either be added to the dimer at the outset of the process, or to the finished film. The parylene film barrier properties are such that diffusion of sufficient amounts of a fluorescent additive compound, necessarily a rather large molecule, into the finished film has not yet been successfully demonstrated. This process would be analogous to a dyeing of the film, which also has not been successfully demonstrated. Practical considerations would further mitigate against such post deposition addition in cases where the substrate surface is convoluted, and especially when uniform distribution of fluorescence over all coated surfaces is required for the overall reliability of the inspection procedure it is intended to facilitate.

If the fluorescent additive compound is to be added to the dimer at the start of the process, it must be sufficiently volatile to pass through the process with the dimer and the product of its cleavage, the monomer, sufficiently condensible to deposit with the parylene during its deposition, and furthermore it must be sufficiently stable to survive the high temperatures of the process unchanged in its ability to create fluorescence. These conditions severely limited the field of choice among known fluorescent additives. The residual fluorescence in parylene produced by the Gorham process is so low as to be insufficient for inspection purposes. The first compound shown to be useful as an additive to dimer to produce fluorescence in parylene films and coatings was anthracene. Later, two members of the Calcofluor family of commercial brighteners, known as Calcofluor White RW, RWP or SD, were shown to be still more effective as a dimer additive for producing fluorescence in parylene coatings. These compounds are 7-dialkylamino-4-methylcoumarins, and as such are chemically different from other Calcofluor family members.

Hence, prior to the present invention, fluorescence in parylene was created only by pre-deposition intervention, specifically by the addition of a very limited number of optical brighteners to the dimer at the time of the vapor deposition polymerization process. This, of course, results in the entire parylene coating exhibiting essentially uniform fluorescence when methods for detecting its brightness are employed. By these processes it was not possible to create or impart fluorescence only at predetermined sites in the parylene coating.

Although studies had been made of the possibility of producing fluorescence by post deposition methods, no success has yet been realized in the permanent incorporation of a fluorescence additive in a parylene film by diffusion, or by a dyeing procedure. Such a procedure, if effective, would be a means of rendering selective sites of parylene coatings fluorescent. While such selective creation of fluorescent parylene coating sites may be of minimal interest in the inspection of coating quality on printed circuit assemblies, other uses abound. However, prior to the present invention, the ability to create specific sites of fluorescence in parylene coatings was unknown. Accordingly, one or more of the following objects will be achieved by the practice of this invention. It is an object of this invention to provide a novel method for the treatment of parylene. Another object of this invention is to provide a process for treating parylene wherein selective sites of fluorescence are imparted to the parylene. A further object is to provide a novel process for selectively imparting fluorescent sites to articles comprised in whole or in part of parylene. A still further object of the present invention is to provide a method for the treatment of Parylene C. Another object of this invention is to provide a process for the treatment of Parylene D. A further object is to provide articles comprised of parylene which exhibit selective sites capable of fluorescing upon exposure to ultra-violet light. Another object is to create fluorescent sites of a predetermined configuration in parylene coatings. A further object is to utilize particular fluorescent sites in parylene coatings for storing and retrieving data. A still further object of the present invention is to provide articles such as negotiable instruments, currency, tapes, disks, and the like, which have a parylene coating containing sites of a predetermined configuration which fluoresce and hence provide for authentication or the storage and recovery of useful data. These and other objects will become apparent to those skilled in the art in the light of the teachings herein set forth.

## SUMMARY OF THE INVENTION

In its broad aspect, the invention relates to a process for the creation of selected sites of fluorescence in articles coated in whole or in part with parylene. The process comprises the steps of:

1) shielding with masking means, those portions of parylene in which fluorescent sites are not desirable,
2) exposing the remainder of the parylene to light excitation means capable of creating fluorescent sites in the parylene and for such a period of time sufficient to create such sites,
3) discontinuing said light-excitation means, and
4) thereafter removing said masking means.

In practice, the present invention provides a unique process for inducing selected fluorescent sites in articles comprised in whole or in part of parylene. The invention also relates to articles prepared by the process and includes those utilized in identification and authentication as well as the storage and retrieval of information.

DESCRIPTION OF THE PREFERRED EMBODIMENTS

As indicated above, the parylenes are very inert polymeric materials essentially insoluble in solvents. Since the classical methods of polymer characterization depend on the study of solutions, many of its properties and characteristics remain unknown.

Whereas the observation of fluorescence in the days of the early parylene workers was a simple matter of literally seeing with the human eye whether the sample glowed under a filtered low pressure mercury lamp, or black light, such as the type commonly used by geologists to examine and classify mineral specimens, the commercial equipment and apparatus of today permits control of the spectral purity and intensity of the excitation light and allows the spectral distribution of the emitted light to be measured with great detail and sensitivity. Thus earlier reports of fluorescence were qualitative and subjective, although direct comparisons of the intensity of fluorescence would permit relative rankings. With today's equipment, not only are quantitative and qualitative comparisons of fluorescence a matter of course, but its ability to detect emitted light to which the human eye is insensitive will lead to the discovery of fluorescence in materials previously categorized as non fluorescent.

The earliest preparations of poly-p-xylylene directly from p-xylene produced material which was described as being fluorescent. The poly-p-xylylenes as prepared by the pyrolysis of cyclo-di-p-xylylene by the method of Gorham, however, were described as essentially non fluorescent. It was concluded that the fluorescence seen was the result of impurities included in the polymer which were generated under the more strenuous conditions required in preparing the polymer directly from p-xylene. It was further concluded that fluorescence was not an inherent property of poly-p-xylylene.

As parylene became a highly desirable coating for printed circuit assemblies, it became important to be able to impart fluorescence to the essentially non-fluorescent polymer by the addition of brighteners to facilitate inspection of the coated circuit assembly. This was accomplished by the addition of brighteners during the process of vapor deposition of the parylene coating onto an appropriate substrate. As previously mentioned, the conditions under which parylene deposition was accomplished severely limited the choice of brightener additives to a very few chemical compounds. Moreover, by adding the brighteners at the time of deposition, the resulting coatings had the brighteners evenly distributed throughout the parylene coating and over the surfaces coated. When subjected to the appropriate light source, the entire coating fluoresced. Accordingly, it was not possible to limit the fluorescence to predetermined sites in the coating.

It was unexpectedly found, however, that certain parylenes, namely Parylene C which contains about one chlorine atom per aromatic ring, and Parylene D, which contains about two chlorine atoms per aromatic ring, could be made to fluoresce after the coating was deposited on a substrate surface. This was surprising in the light of the earlier conclusion that fluorescence was not an inherent property of the polymer. It was further surprising because in has been generalized from observations in other molecular systems that the inclusion of a heavier atom such as chlorine in a fluorescing system tends to reduce or quench the fluorescence.

As indicated previously, the creation of selected fluorescence sites in parylene is effected by exposing the parylene to light excitation means while blocking or masking, if necessary, those areas of the polymer where fluorescence is not desired.

The emission of light by matter, luminescence, can originate by any of a variety of mechanisms, depending on the source of the energy which is eventually emitted (chemical, electrical, thermal, etc.). Fluorescence and phosphorescence are both types of luminescence in which the energy source is light which has fallen on, and has been absorbed by the matter. Fluorescence is the immediate release, and phosphorescence is the delayed release of luminescence upon absorption of the incident or excitation light. Fluorescence is distinguished operationally from phosphorescence as luminescence reemission within one microsecond. Typically, phosphorescence delays between absorption and reemission are of the order of milliseconds.

In the practice of the present invention excitation of the parylene coating for the purpose of producing fluorescent sites is preferably effected at wavelengths of from about 250 to about 400 nm and more preferably from about 270 to 300 nm. It has been observed that the optimum excitation in films of 25 micrometers thickness is achieved at about 280 nm.

The energy of the photons of light increase as wavelength shortens. Fluorescence excitation photons

must have a certain minimum energy to cause photochemical changes to occur in the targeted structural entities, which, through their photoinduced chemical change, are responsible for creating the fluorescence. The identities of these structural entities have not yet been established. By their behavior, they are presumed to be distributed throughout the bulk of the parylene film.

A further requirement is that the excitation light be available for absorption by the target entities. The ability of the benzene rings of the parylene polymer molecule to absorb light generally increases the light incident upon the parylene film passes to shorter wavelengths through the 400 to 250 nm range. In thicker layers of parylene and at shorter wavelengths, increasing proportions of the photochemically critical entity will not be exposed. It is known from the parylene ultraviolet absorption spectrum that at 280 nm, the light incident on a parylene film of 25 micrometers thickness survives passage to the opposite side with some residual intensity. At wavelengths near 250 nm, the excitation light would suffer practically complete absorption after passing through only a portion of a 25 micrometer film. Thus the optimal 280 nm light represents a balance between sufficient energy to cause the photochemical change to occur, and adequate transparency of the parylene film to permit irradiation of the photochemically critical entities throughout the thickness of the film. In an absorbing medium, regardless of whether or not a portion of the absorbed energy is re-emitted as fluorescence, the intensity of the excitation radiation diminishes with depth making less excitation available for creating fluorophores lying deeper in the medium.

In general, a variety of light excitation means can be provided to impart the selected fluorescent sites in parylene. The common mercury lamp, in most of its modifications, which produces a few percent of its total energy output in the optimal range of 270 to 300 nm has been found optimal for exciting fluorescent sites in parylene films and coatings. One can use filters or monochromators to exclude the ultraviolet radiation that falls out of the optimal range so that heating or other unwanted effects which might be caused by radiation outside of the optimal wavelength range can be eliminated.

The use of lasers as fluorescence excitation sources would seem advantageous, especially in image or data recording applications. Most ultraviolet lasers known today gas lasers. The light of the nitrogen laser, fundamentally 337 nm, may be too low in energy or too long in wavelength to be particularly efficient in exciting fluorescence in Parylene C or Parylene D films. The dye lasers, which typically are pumped by the nitrogen laser, operate at still lower energy, and therefore would be of even less expected value. Excimer lasers seem more interesting. The krypton fluoride laser at 249 nm and the xenon chloride laser at 308 nm are off optimal by 30 nm in either direction, but might be the most interesting of currently available lasers to utilize. Both of these excimer lasers can be operated in non standard modes to obtain light closer to 280 nm, although such nonstandard operation might not be necessary.

Exposure times for inducing fluorescent sites in parylene can vary considerably depending primarily on the intensity of the excitation source and the composition of the parylene film with respect to the structural entities which are photochemically altered to become fluorescent.
In practice, it has been observed that exposure of the parylene coating to the fluorescent site excitation means can range from about 1 second to 1 hour, and preferably from about 5 seconds to five minutes. Depending primarily upon the intensity of the source, the particular exposure time can vary above and below these ranges.

While fluorescent sites are optimally created in Parylene C and Parylene D films using ultraviolet light of wavelength about 280 nm, after being created, these same fluorescent sites are optimally observed or read out using ultraviolet radiation of wavelength about 321 nm. During the observation or reading out of the created fluorescent sites, the photons which are sensed are of lower energy and of longer wavelengths. During readout, the readout excitation light energy absorbed will be redistributed throughout the parylene coating by any of a number of mechanisms. The only one of direct interest to us at present is the "immediate" emission of a photon of light in the phenomenon called fluorescence. Because a portion of the energy of the absorbed photon is always lost in the very short time between absorption and "immediate" re-emission, the emitted photon is always of a lower energy, or longer wavelength than the one which was absorbed. Moreover, whereas the incident readout excitation is unidirectional, the fluorescence photons are emitted in all directions.

The fluorescence is most practically observed with the human eye. However, using a luminescence spectrometer, it is found that the maximum fluorescence intensity is at a wavelength of 371 nm, which is a type of light to which the human eye is insensitive. Even when the readout excitation photons are monochromatic, in the optimal case purely at 321 nm, the emitted photons have wavelengths extending from 330 nm to beyond 500 nm. It is the emitted wavelengths longer that about 390 nm to which the human eye begins to have appreciable sensitivity.

In a simplest form, a "black light" is used as the readout excitation means in surroundings of subdued illumination. In the "black light", the output of a small mercury lamp is filtered to remove most radiation to

which the human eye is sensitive, passing the ultra-violet portion of its output as the readout excitation. The fluorescent site patterns within Parylene C of Parylene D coatings or films which have been previously exposed using the fluorescent site excitation means will be seen as a brightly glowing fluorescence. The brightness of the readout fluorescence will be directly proportional to the intensity of the readout excitation reaching the surface of the parylene coating, which in turns depends directly on the intensity of the black light source, and inversely with the square of the distance between the black light source and the fluorescing sites in the parylene coating.

In a more efficient form, approximately monochromatic light of about 321 nm extracted from an appropriate source using filters or monochromaters as necessary, and directed upon a Parylene C or Parylene D coating which has previously been written to using the fluorescent site excitation means. Light emitted from the written pattern is filtered or monochromated to reject specular reflection of the 321 nm excitation and passed to a photoelectric detection system which responds well to light in the general region of the near ultraviolet region near 370 nm.

Using the more efficient form, patterns written to the Parylene C or Parylene D coatings can be re-read many times without being altered by the readout excitation. In the simplest form, the stability of the written patterns will depend on how much they are degraded by the output of the readout excitation means in the region of 280 nm. Stability of the written patterns will be favored by the use of low intensity readout excitation sources, particularly if their wavelength content is not controlled.

The novelty of the present invention resides, in part, in inducing fluorescent sites in parylene coatings. As indicated this is effected by directing the excitation light to just those portions of the parylene where fluorescence is desired. For inducing fluorescence in parylene coatings wherein the site is relatively large, this can be easily accomplished by masking those portions where fluorescence is not desired. If the desired fluorescence site is very small, then a light excitation source can be employed which emits light of a relatively narrow beam only in those areas where fluorescence is desired. For such applications, it would be possible to utilize modified units such as steppers or projection aligners which are in use in photolithography.

Thus, for many applications such as the identification and authentification of articles having a portion thereof coated with parylene, placing a simple mask over the coating will be sufficient. Exposure of the unmasked areas can then be made to the light excitation means.

For more complex articles such as the introduction of retrievable data onto a parylene coated disk or tape, it will be preferred to use a device which only emits light of the proper intensity and wavelength at the sites where fluorescence is desired.

In practice, the process of the present invention can be utilized for a wide variety of applications where it is desired to impart and later retrieve data such as identifying marks, symbols, letters, words or digital data, and the like, to articles coated in whole or in part with parylene. Such identifying or authenticating data can be as simple as a single mark or symbol imparted to parylene coated articles for purposes of quality control. Alternatively, identifying data can be of a more complex nature, such as logos, letters, words and the like, imparted to negotiable instruments including currency, bank notes, stock and bond certificates, and the like. Credit cards, passports and other articles, can also have identifying marks on the form of fluorescent sites created on the article for the purposes of identification or authentication. When exposed to a proper fluorescence detecting device, the data which has been imparted to the parylene coating an is not visible to the naked eye, becomes readable.

Articles such as tapes, disks and other digital memory can also be coated with parylene and fluorescent sites imparted in accordance with the teachings of the present invention for the storage and retrieval of useful information in digital form.

In practice, all that is needed is a thin layer of parylene, whether or not it remains attached to the substrate on which it was deposited to provide sites for imparting fluorescence. Deposition of the parylene coating on articles is effected by methods known in the art.

The following examples is illustrative of the present invention.

Example 1

A piece of Parylene C film, 0.001 inch in thickness and 1 inch in width and 2 inches long, previously prepared from DPXC by vapor deposition polymerization on a flat glass substrate and then removed from the glass substrate, was fixed to an opaque, absorbing and non-fluorescent paper backing, and mounted in the sample holder of a 5212-3130 Front Surface Accessory of a Perkin Elmer model LS5B Luminescence Spectrometer. The excitation beam of the spectrometer is fixed at a 60 degree angle to the plane of the parylene, and any luminescence emission produced is monitored at an angle of 30 degrees from the plane

of the parylene film and 90 degrees from the excitation beam. In the Luminescence Spectrometer, the wavelength of the excitation beam can be selected at will. The intensity of the excitation beam can be reduced by narrowing the Excitation Slit, the primary purpose of which is to improve wavelength purity, and by inserting neutral density filters in the excitation beam. A shutter in the excitation beam can be interposed to blank off the excitation beam and reduce the intensity reaching the sample to zero. The wavelength being monitored in the emission beam can also be selected at will, or scanned over a range of values. The Emission Slit, which primarily selects the wavelength purity of the emitted light being monitored, also reduces the response of the detector.

For the write operation, the excitation wavelength was set to 280 nm and the Excitation Slit to its widest position, 15 nm. In this configuration the excitation beam is the maximum intensity possible in this spectrometer. The emission monochromater is set so that the detection system responds to light of wavelength 434 nm. Immediately after the shutter in the excitation beam is opened, fluorescence at 434 nm, originally at zero, abruptly starts to climb. After about 10 minutes the rate of rise in fluorescence levels out. The intensity of fluorescence reaches a peak at 20 minutes, and then upon further irradiation starts to gradually decrease. After about 30 minutes it has lost about 5% of the maximum intensity.

For the readout operation, the excitation wavelength is set to 321 nm and the intensity of the excitation beam is reduced by a factor af fifty by placing a 2% neutral density filter in the excitation beam. In addition the excitation slit is decreased to the narrowest setting "00", which further reduces the beam intensity substantially. Samples of the parylene film can be examined at various stages of exposure to the fluorescent site excitation irradiation. The unexposed Parylene C film exhibits a broad, weak fluorescence spectrum which peaks at 371 nm. After exposure, a different broad fluorescence spectrum develops which has a maximum at 375 nm. After exposure for three or four minutes, the new fluorescence spectrum reaches a maximum of about eight times the maximum intensity of the fluorescence in the unexposed parylene film.

Further exposure of the sample reduces the intensity of the fluorescence at 375 nm, but results in the development of a new, longer wavelength fluorescence having multiple maxima at about 410 and 434 nm. It is the development of these longer wavelength maxima which make the fluorescence developed by the write exposure observable with the naked eye.

Once written with a variety of exposure doses, Parylene C samples were exposed to normal room illumination with no particular care, and their fluorescence intensity was checked over two weeks time against the intensity originally observed. Unless the samples were placed in the Front Surface Attachment exactly in the position in which they were irradiated, reduced fluorescence was observed. However, when samples were exactly repositioned for observation, so that precisely the same regions exposed are reexamined, no change in intensity of the fluorescence could be discerned.

Example 2

Another piece of 1 mil thick Parylene C film is placed in the sample compartment of the Luminescence Spectrophotometer as in Example 1, and the spectrophotmeter conditions are set up identically. When the shutter is first opened, fluorescence intensity is sensed by the emission monochrometer and the detector output begins to rise immediately.

After several seconds, the shutter is closed. The fluorescence intensity drops immediately to zero. With no excitation light, no fluorescence is possible.

After a few more seconds, the shutter is reopened. The fluorescence intensity rises abruptly to the level of intensity registered immediately before the shutter was closed. The fluorescence intensity then continues to grow at the same rate it was growing immediately before the shutter was closed. When the interval during which the shutter was closed is removed from the curve, the fluorescence intensity follows the same time dependence pattern as in Example 1.

Example 3

This example illustrates the use of the process of the present invention for identifying and/or authenticating currency. In this example, new United States one dollar bills were placed in a parylene generator and coated with 3400 angstroms of parylene "C". Some of the bills were masked or templated with right triangle heavy duty paper forms covering about one half of the bills. Other bills were templated with letters, stars, washers and perforated plates. The bills were then exposed to high intensity U.V. light in a UVEX model LCU 7500. The coated and exposed bills appeared normal to the eye. However, upon examination under black light, the bills glowed brilliantly in exact replication of the templates used. Although

the covered areas appeared dark, the uncovered areas glowed brilliantly.

Although the invention has been illustrated by the preceding examples, it is not to be construed as being limited to the materials employed therein, but rather, the invention is directed to the generic area as herein disclosed. Various modifications and embodiments thereof can be made without departing form the spirit or scope thereof.

## Claims

1. A process for creating selective sites of fluorescence in articles comprised in whole or in part of parylene, which process comprises the steps of:
   1) shielding with shielding means, those portions of parylene in which fluorescent sites are not desired,
   2) exposing the remainder of the parylene to light excitation means capable of creating fluorescent sites in the parylene and for a period of time sufficient to create such sites, and
   3) thereafter removing the shielding means.

2. The process of claim 1 wherein said parylene is Parylene C.

3. The process of claim 1 wherein said parylene is Parylene D.

4. The process of claim 1 wherein said excitation means has a wavelength of from about 250 to 400. nm.

5. The process of claim 1 wherein said excitation means has a wavelength of from about 270 to 300 nm.

6. The process of claim 1 wherein the excitation means is a mercury lamp.

7. The process of claim 1 wherein the parylene is exposed to said excitation means for a period of about 1 second to 1 hour.

8. The process of claim 1 wherein the parylene is exposed to said excitation means for a period of about 5 seconds to about 5 minutes.

9. An article comprised of in whole or in part of parylene and wherein selective sites have been rendered fluorescent by the process of claim 1.

10. The article of claim 9 which is in the form of a film comprised in whole or in part of parylene.

11. The article of claim 9 wherein the parylene is present as a coating on at least a portion of said article.

12. The article of claim 9 which is in the form of a tape and wherein at least one surface of said tape is coated with parylene.

13. The article of claim 9 which is in the form of a disk and wherein at least one surface of said disk is coated with parylene.

14. The article of claim 9 which is a negotiable instrument.

15. The article of claim 9 which is currency.

16. The article of claim 9 which is a stock or bond certificate.

17. The article of claim 9 which is a computer tape.

18. The article of claim 9 which is a computer disk.

19. A method of identifying and insuring the authenticity of an article which comprises the steps of:
   1) coating at least a portion of said article with parylene;
   2) shielding with shielding means of a particular configuration, those portions of the parylene coating

in which fluorescent sites are not desirable;
3) exposing the remainder of the parylene to light excitation means capable of creating fluorescent sites in the parylene and for a period of time sufficient to create such sites,
4) removing the shielding means; and
5) exposing the article to light of a wavelength suitable for the detection of the fluorescent sites and to confirm the presence of the predetermined configuration.

**20.** A method of storing and retrieving data from an information retrieval source which comprises:
1) providing a tape or disk article of the type used to store computer software and data;
2) coating at least a portion of said article with parylene
3) inducing selected fluorescent sites into said parylene with a light excitation source and wherein said fluorescent sites correspond to individual units of readable data;
4) reading said stored data by sequentially exposing said sites to a light detecting source.

**21.** The method of claim 20 wherein said article is a tape.

**22.** The method of claim 20 wherein said article is a disk.

**23.** An article containing stored and retrievable data prepared by the method of claim 20.